(19) Europäisches Patentamt / European Patent Office / Office européen des brevets

(11) **EP 3 270 029 B1**

(12) **EUROPEAN PATENT SPECIFICATION**

(45) Date of publication and mention
of the grant of the patent:
**04.03.2020 Bulletin 2020/10**

(21) Application number: **16761106.0**

(22) Date of filing: **10.03.2016**

(51) Int Cl.:
*F16L 57/06* (2006.01)     *F16L 43/00* (2006.01)
*F16L 9/02* (2006.01)     *F16L 9/22* (2006.01)
*B65G 53/52* (2006.01)     *B65G 53/32* (2006.01)

(86) International application number:
**PCT/CN2016/076021**

(87) International publication number:
**WO 2016/141879 (15.09.2016 Gazette 2016/37)**

(54) **TWO-BRANCH OR MULTI-BRANCH DOUBLE-LAYER WEAR-AND-IMPACT-RESISTANT TUBE AND MANUFACTURING METHOD THEREOF**

DOPPELSCHICHTIGES VERSCHLEISS- UND SCHLAGFESTES ZWEIZWEIG- ODER MEHRZWEIGROHR UND HERSTELLUNGSVERFAHREN DAFÜR

TUBE RÉSISTANT À L'USURE ET AUX CHOCS, À DEUX COUCHES, DU TYPE À DEUX BRANCHES OU À PLUSIEURS BRANCHES ET PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2015 CN 201510108071**
**08.08.2015 CN 201510480201**

(43) Date of publication of application:
**17.01.2018 Bulletin 2018/03**

(73) Proprietor: **Zhou, Zhaohui**
**Changsha, Hunan 410604 (CN)**

(72) Inventor: **Zhou, Zhaohui**
**Changsha, Hunan 410604 (CN)**

(74) Representative: **Franke, Dirk**
**Franke & Partner**
**Patent- und Rechtsanwälte**
**Widenmayerstraße 25**
**80538 München (DE)**

(56) References cited:
**EP-A1- 1 873 440     EP-A1- 2 781 476**
**CN-A- 101 913 504     CN-A- 102 563 222**
**CN-A- 104 653 934     CN-A- 104 747 849**
**CN-A- 105 526 449     CN-B- 102 563 222**
**CN-U- 202 629 358     CN-U- 204 647 672**
**CN-U- 204 677 958     CN-U- 204 677 960**
**CN-U- 204 717 204     CN-U- 204 717 206**
**CN-Y- 2 861 697     DE-C1- 19 500 952**
**DE-C1- 19 500 953     US-A- 3 794 359**
**US-B1- 6 520 213**

**EP 3 270 029 B1**

**Description**

Related Application

The present application claims the priority of the China Invention Patent application No.201510108071.8 titled of "An two-layer two parts wear resistant elbow " filed on March 12, 2015; and the priority of the China Invention Patent application No.201510480201.0 titled of "Auto-fill two-layer two parts wear resistant elbow of concrete pump truck and manufacturing method thereof' filed on August 8, 2015.

Field of the Invention

The present invention relates to a conveying connecting elbow structure for conveying fluid state material, particularly to an auto-fill two-layer two parts wear resistant elbow of concrete pump truck and a manufacturing method thereof.

Background

Tube forming technologies mainly include casting, molding and so on, all of which depend on moulds and in which tubes are conformally formed by casting or hot/cold pressing techniques. Most machinery equipments and pipelines use tubes mainly for conveying various materials. Materials for tubes include cast iron, stainless steel, alloy steel, malleable cast iron, carbon steel, non-ferrous metal and plastic materials. In building, mine, metallurgy, electric power, petroleum, coal, grain processing industries, materials are conveyed by line pressure and pipelines are subject to large pressure and severe wearing. Therefore, high overall performance requirements have been imposed on conveying pipes, in particular connecting tubes and increasing service life of tubes has become a difficulty to overcome.

Single-layer high manganese steel tubes are most commonly used tubes at present. There are also a few tubes using double layers high chromium cast iron. Single-layer high manganese steel tubes suffer poor wear resistant property, low hardness and low safety. Double-layer wear resistant tubes have high costs, better quality, excellent wear resistant property, high hardness and high safety, however their performance-to-price ratio is low.

The patent CN 203023710U discloses a wear resistant tube, which includes a body, and further includes a high molecular elastomer layer disposed in said body with a thickness of 3-15 mm at the middle section of said tube and 2-10 mm at ends of said tube. However, the wear resistant tube suffers increased cost, high probability of being worn between the body and the high molecular elastomer layer, and high probability of peeling the high molecular layer under the washing of fluid.

The patent CN 104061394A discloses a method for manufacturing curved pipe fittings and curved pipe fittings obtained therefrom. The method includes making the first external curved tubular component in at least two parts in which each of said parts has a cross section which is a respective portion of the complete tubular section of the first external curved tubular component,- making, in a distinct and autonomous production process, said second internal curved component in a monolithic and definitive form; disposing said second internal curved component internally in contact with at least one of said two parts of the first external curved tubular component, and bringing said at least two parts near each other along respective connection edges, welding the at least two parts along said connection edges to define said first external curved tubular component and to enclose said second internal curved component inside it.

For the structure of above patent, if the second inner curved component of the the curved pipe fitting adopts a semi-tube design, there will be significant problems about mounting fastness for the first outer curved tubular component and the second inner curved component, and at the same time, a problem of poor wear-resistance will occur if the second inner curved component is used as the extension part. If the second inner curved component adopts a complete tube design, the second inner curved component will have to adopt one same material, which results in wasting of material and influence on economy.

Therefore, the tube manufacturing method in prior art and the tube thereof have defects of high cost, low wear resistance and short service time.

DE 195 00 952 C1 discloses an arcuate tube section for replaceable arrangement in piping used for hydraulic or pneumatic conveying of solid materials. The tube section has a jacket tube welded between end coupling flanges, and an abrasion-resistant inner split fitting with radial clearance from it.

DE 195 00 953 C1 A discloses a pipe bend for a pipeline for hydraulically or pneumatically conveying solids. The pipe bend includes a middle pipe portion and double-layer coupling flanges welded to the ends of the middle pipe portion.

Summary

The object of the present invention is to overcome the above-mentioned problems of the prior art by providing two parts double-layer wear-and-impact-resistant tube with low cost and long service time.
More specifically, the present invention provides a two parts double-layer wear-and-impact-resistant tube as defined in claim 1 and a method for manufacturing such a tube as defined in claim 8. Further preferred embodiments are defined in the dependent claims.
In another preffered embodiment, the thickness of at least two tube walls of the inner wear-resistant assembled tube is different from each other.
In another preffered embodiment, the filling channels are prereserved gaps between adjacent tube walls, the width of the filling channels is 0.5-2 mm.
In another preffered embodiment, the width of the filling channels is 1 mm.
In another preffered embodiment, it further includes wear resistant connecting flanges, each of the wear resistant connecting flange is consisted of a flange and a wear resistant sheath mounted inside the flange, the wear resistant connecting flanges are weld on the two ends of the outer protective tube and the inner wear-resistant assembled tube , respectively.
In another preffered embodiment, the wear resistant sheath has an inclined coincidence surface on its outer edge.
In another preffered embodiment, the wear-and-impact-resistant tube is a wear resistant elbow, wherein, the inner wear-resistant assembled tube of the wear resistant elbow is consisted of an inner wear-resistant small curve portion and an inner wear-resistant large curve portion, and the inner wear-resistant small curve portion made of materials with different wear resistant property from each other.
In another preffered embodiment,the outer protective tube includes a large curve outer protective portion and a small curve outer protective portion, the outer protective tube is made of a material that different from the same of the inner wear-resistant assembled tube , the large curve outer protective portion is disposed outside the inner wear-resistant large curve portion, the small curve outer protective portion is disposed outside the inner wear-resistant small curve portion, the large curve outer protective portion and the small curve outer protective portion are weld together along their side edges forming the tube body with tubular cross section, and the end edges of the large curve outer protective portion and the small curve outer protective portion are weld together.
In another preffered embodiment, the large curve outer protective portion and the small curve outer protective portion are made of low-alloyed steel or medium-low carbon steel material.
In another preffered embodiment, the wear resistant property of the material adopted by the inner wear-resistant large curve portion is better than that of the inner wear-resistant small curve portion.
In another preffered embodiment, the tube wall of the inner wear-resistant assembled tube is made of one of high chromium cast iron, medium chromium cast iron, low chromium cast iron, wear resistant cast iron, ceramics, hard alloy, bearing steel, alloy steel and high molecular material.
In another preffered embodiment, the inner wear-resistant large curve portion is designed to be thicker and thicker from two ends A to middle position B, and thicker and thicker from the two sides C to middle position D.
In another preffered embodiment, the wear-and-impact-resistant tube is a wear resistant straight tube.
In another preffered embodiment, the thickness of the inner wear-resistant assembled tube of the wear resistant straight tube is different along the periphery of its cross section.
In another preffered embodiment, in the inner wear-resistant assembled tube , the material adopted by tube wall at its bottom has a better wear resistant property than that of side tube wall and top tube wall.
In another preffered embodiment, the wear-and-impact-resistant tube is a wear resistant deformed tube.
In another preffered embodiment, different parts of the inner wear-resistant assembled tube of the deformed tube are made of different wear resistant material based on the difference of wearing degree of each part.
In another preffered embodiment, the width of the filling channels is in the range of 0.5-2 mm.
In another preffered embodiment, the width of the filling channels is 1 mm.
In another preffered embodiment, the wear-and-impact-resistant tube is a wear resistant elbow, wherein, the inner wear-resistant assembled tube of the wear resistant elbow includes an inner wear-resistant small curve portion and an inner wear-resistant large curve portion, and the inner wear-resistant large curve portion is made of material with better wear resistant property than that of the inner wear-resistant small curve portion.
In another preffered embodiment, the inner wear-resistant large curve portion is designed to be thicker and thicker from two ends A to middle position B, and thicker and thicker from the two sides C to middle position D.
In another preffered embodiment, the wear-and-impact-resistant tube is a wear resistant straight tube, and the thickness of the inner wear-resistant assembled tube of the wear resistant straight tube is different along the periphery of its cross section.
In another preffered embodiment, one of the two or more pieces of the tube wall is made of wear resistant cast iron, ceramics or hard alloy, while another one of the two or more pieces of the tube wall is made of alloy steel or high molecular material.

In another preffered embodiment, the wear-and-impact-resistant tube is a wear resistant deformed (specific shape) tube, different parts of the inner wear-resistant assembled tube of the deformed tube are made of different wear resistant material depending on the differences of wearing degree between different parts.

In another preffered embodiment, the method further includes producing wear resistant connecting flanges, each of the wear resistant connecting flange consisted of a flange and a wear resistant sheath mounted inside the flange, the wear resistant sheath has an inclined coincidence surface on its outer edge.

In the present invention, in order to protect the wear resistant combined tube from collision by external force, distortion and damage by striking and distortion or even damaged by impact force of internal materials during the transportation, installation and use of the tube, an outer laye protection tube is provided. The outer laye protection tube is composed of two or more parts, cross section of each part is an arc, and all the parts combine together to form a circle of 360 degree (the circle can be a perfect circle or a oval-shaped circle).

The wear resistant combined tube is composed of two or more parts, each part made of different wear resistant material. Considering that different part of the tube may be worn in different manner while transfering goods and may be worn in different intensity, different factors should be considered while enhancing different parts of the tube. Therefore, in the present invention, different parts of the tube are made of different materials, and the material may be selected direct to the nature of each part and enhance its wear resistant property. For example, for an elbow, its large curve portion should be enhanced, and for a straight tube, its bottom is enhanced.

For an elbow, considering that its large curve portion suffers the most serious shock and wear, the large curve portion is made of material with better wear resistant property than that of the inner wear-resistant small curve portion. Furthermore, the inner wear-resistant large curve portion is designed to be thicker and thicker from two ends A to middle position B, and thicker and thicker from the two sides C to middle position D,ensuring the high wear resistant property of the portion that is easy to be worn. The small curve portion may be designed as has an even thicker or not. For a straight tube, Considerring that its bottom suffers the most serious shock and wear, the material of its bottom has a better wear resistant property than that of other parts.

Different part of the inner wear-resistant assembled tube are made of two or more kinds of material selected from high chromium cast iron, medium chromium cast iron, low chromium cast iron, wear resistant cast iron, ceramics, hard alloy, bearing steel, alloy steel and high molecular material. The advantage of such tube is that, for the portion (part) that is easy to be shock or worn, high wear resistant material is adopted, whild for the portion (part) that suffers small shock or worn, it does not need the same haigh wear resistant material, and thus, it saves cost and at the same time ensures the wear-and-impact-resistant property of the tube.

In order to extend the service life of the wear resistant connecting flange and guarantee smooth connection with other components, a wear resistant sheath is provided in the present invention; and a wear resistant sheath engagement chamfer is provided thereon on the wear resistant sheath outer circle.

Since adopted above technical solution, the two or more parts double-layer wear-and-impact-resistant tube can be applied in architecture industry, mine industry, metallurgy,power industry, petroleum industry, coal industry, grain processing industry and so on, for transferring goods. In these industries, the tube is also designed as having two or more parts and double-layer,i.e. protection layer and wear resistant layer, and the wear resistant layer is departed into two or more parts.

In order to extend the life of the tube, the tube wall of the present invention does not have uniform thickness (the inner wear-resistant large curve portion is designed to become thicker from either side A to the middle B and from either side C to the middle D), the portion that is worn seriously in use is thicker.

The wear resistant connecting flange is designed to facilitate connection and installation of the tube with other equipments and the wear resistant sheath inside the wear resistant connecting flange guarantees wear resistance of the open end, prolongs the service life of the wear resistant connecting flange and enhances its leakproofness. The inner-layer heterogeneous wear resistant combined tube may use wear resistant material such as high chromium cast iron, medium chromium cast iron, low chromium cast iron, wear resistant cast iron, ceramics, hard alloy, bearing steel, alloy steel, high molecular material or wear resistant layer stacked with wear resistant strips,so that enhance the wear resistant property in several times. This design can reduce the entire weight of the tube by at least 10%, thereby achieving the purpose of cost reduction, material saving, resource saving, long service life, low price, folds of improvement of performance to price ratio; ease of volume production, stable and reliable quality and high safety performance.

In the present invention, by providing filling channels between two adjacent tube walls of the inner combined tube, the medium (or materials) can leak into space between the outer tube and the inner tube, enhancing the wear resistant property. Furthermore, by adding gaps and providing buffer space for the inner tube, it would not be broken by a such shock, releasing the problem of easy broken or cracked by shock and wear of the tube.

Those skilled in the art have a preconception in the wear resistant tube design: they deemed that it would be more fasten for a tube to be formed in an integration way, which is not eay to be worn and broken. Actually, this is not the truth, by dividing a whole tube into two or more parts, it is not easy to be broken while shocked than a whole one.

Furthermore, according to the present invention, by setting filling channels between each adjacent parts and adopting different materials for them, it enables the medium (or materials) transfered enter into space between the outer tube and the inner tube, which would not influence the duration of the tube, but provide a buffer space for the inner tube when it is shocked, inducing it is not easy to be broken. Also, such buffer can reduce the wear of the tube, extend the duration. This is unexpected by the skilled in the art.

Furthermore, in the present invention, the outer protection tube and the inner wear resistant tube are fixed together by wear resistant connecting flanges,and would not induce wear between each other. Such design can reduce the entire weight of the tube by at least 10%, thereby achieving the purpose of cost reduction, material saving, resource saving.

The tube of the present invention have long service life, low price, folds of improvement of performance to price ratio; ease of volume production, stable and reliable quality and high safety performance.

Brief Desription of Drawings

Fig. 1 is a schematic diagram of the entire structure of the two or more parts double-layer wear-and-impact-resistant tube in embodiment 1 not according to the present invention, which is made as elbow (bent tube).

Fig. 2 is a sectional schematic diagram of the entire structure of the two or more parts double-layer wear-and-impact-resistant tube in embodiment 1 not according to the present invention .

Fig. 3 is a structure diagram of tube body of the two or more parts double-layer wear-and-impact-resistant tube in embodiment 1 not according to the present invention.

Fig. 4 is a structure diagram of double layer 5 in embodiment 1 not according to the present invention.

Fig. 5 is a sectional structure diagram of double layer 5 in embodiment 1 not according to the present invention.

Fig. 6 is a structure diagram of large curve protective portion 7 in embodiment 1 not according to the present invention.

Fig. 7 is a transverse section structure diagram of large curve protective portion 7 in embodiment 1 not according to the present invention.

Fig. 8 is a structure diagram of inner-layer wear resistant large curve 8 in embodiment 1 not according to the present invention.

Fig. 9 is a transverse section structure diagram of inner-layer wear resistant large curve 8 in embodiment 1 not according to the present invention.

Fig. 10 is a longitudinal section structure diagram of inner-layer wear resistant large curve 8 in embodiment 1 not according to the present invention.

Fig. 11 is structure diagram of double-layer small curve 6 in embodiment 1 not according to the present invention.

Fig. 12 is section 1 structure diagram of double-layer small curve 6 in embodiment 1 not according to the present invention.

Fig. 13 is a structure diagram of small curve protective portion 11 in embodiment 1 not according to the present invention.

Fig. 14 is a sectional section structure diagram of small curve protective portion 11 in embodiment 1 not according to the present invention.

Fig. 15 is a structure diagram of inner-layer wear resistant small curve 12 in embodiment 1 not according to the present invention.

Fig. 16 is a sectional structure diagram of inner-layer wear resistant small curve 12 in embodiment 1 not according to the present invention.

Fig. 17 is a structure diagram of wear resistant connecting flange 3 in embodiment 1 not according to the present invention.

Fig. 18 is a transverse section structure diagram of wear resistant connecting flange 3 in embodiment 1 not according to the present invention.

Fig. 19 is a structure diagram of flange 15 in embodiment 1 not according to the present invention.

Fig. 20 is a transverse section structure diagram of flange 15 in embodiment 1 not according to the present invention.

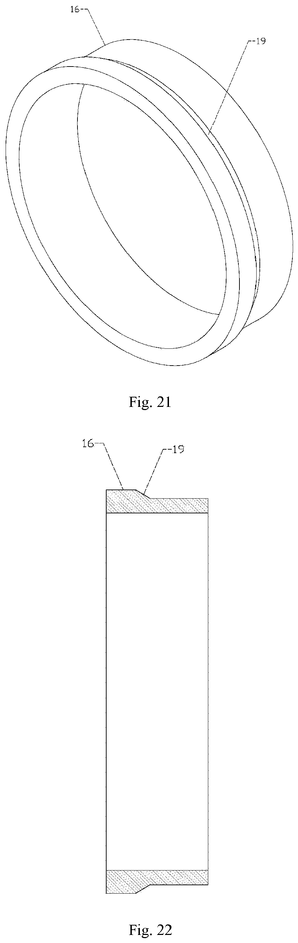

Fig. 21 is a structure diagram of wear resistant sheath 16 in embodiment 1 not according to the present invention.

Fig. 22 is a transverse section structure diagram of wear resistant sheath 16 in embodiment 1 not according to the present invention.

Fig. 23 is a sectional schematic diagram of the two or more parts double-layer wear-and-impact-resistant tube in embodiment 2 of the present invention, which adds a buffer chamber.

Fig. 24 is a transverse section schematic diagram of the two or more parts double-layer wear-and-impact-resistant tube in embodiment 3 of the present invention, which is made as straight tube.

Fig. 25 is a sectional schematic diagram of the two or more parts double-layer wear-and-impact-resistant tube in embodiment 3 of the present invention.

Fig. 26 is a transverse section schematic diagram of the two or more parts double-layer wear-and-impact-resistant tube in embodiment 4 not according to the present invention.

Fig. 27 is a transverse section schematic diagram of the two or more parts double-layer wear-and-impact-resistant tube in embodiment 5 not according to the present invention, which is made as straight tube.

Detailed Description of Embodiments

**Embodiment I:**

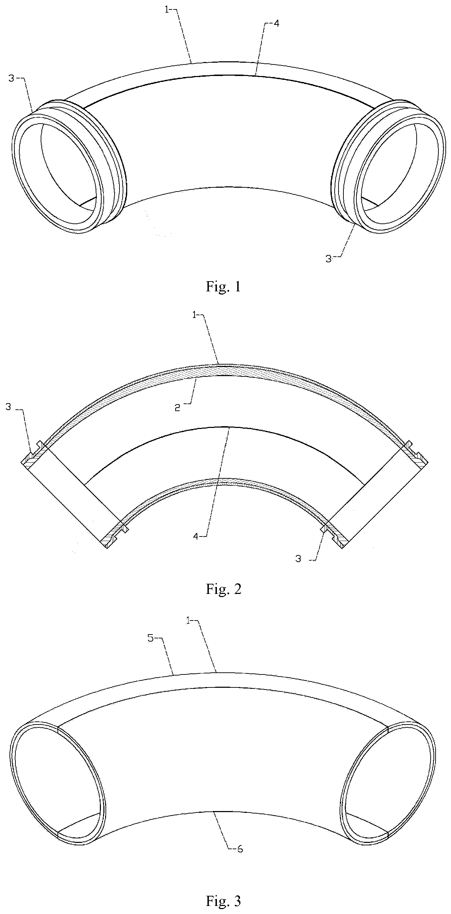

As shown in Figs 1-3, in this embodiment not according to the present invention, the two or more parts double-layer wear-and-impact-resistant tube is made as an elbow, which consists of an outer protective tube 1, an inner wear-resistant assembled tube 2, which both have a structure of elbow. The inner wear-resistant assembled tube 2 is covered in the outer protective tube 1. The outer protective tube 1 is used for protecting the inner wear-resistant assembled tube 2, to avoid the inner wear-resistant assembled tube 2 be damaged during transporting, installing and using.

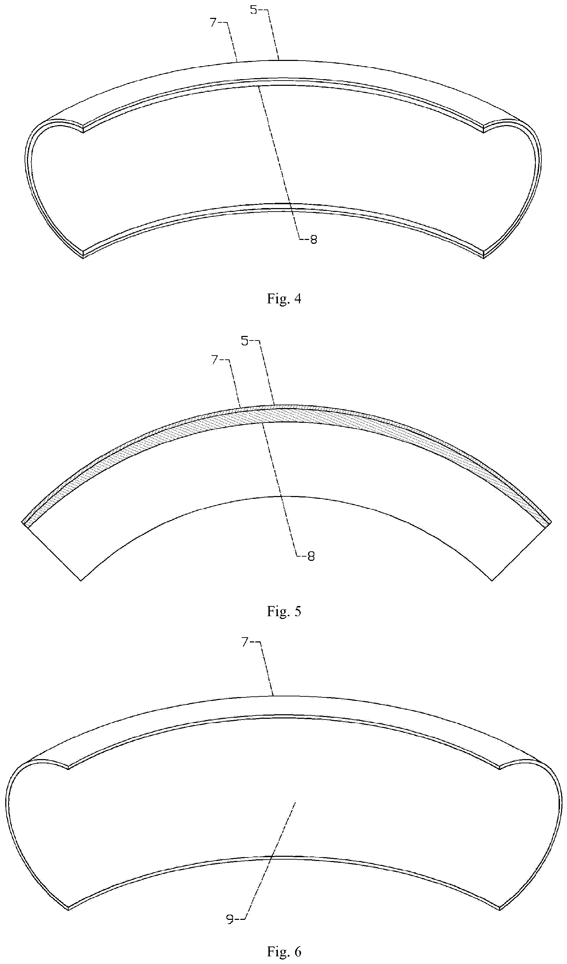

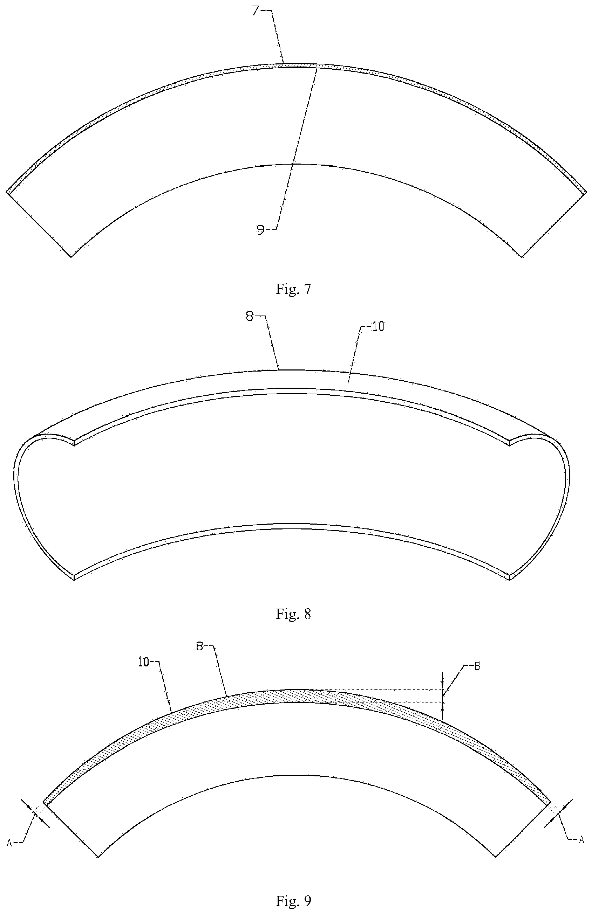

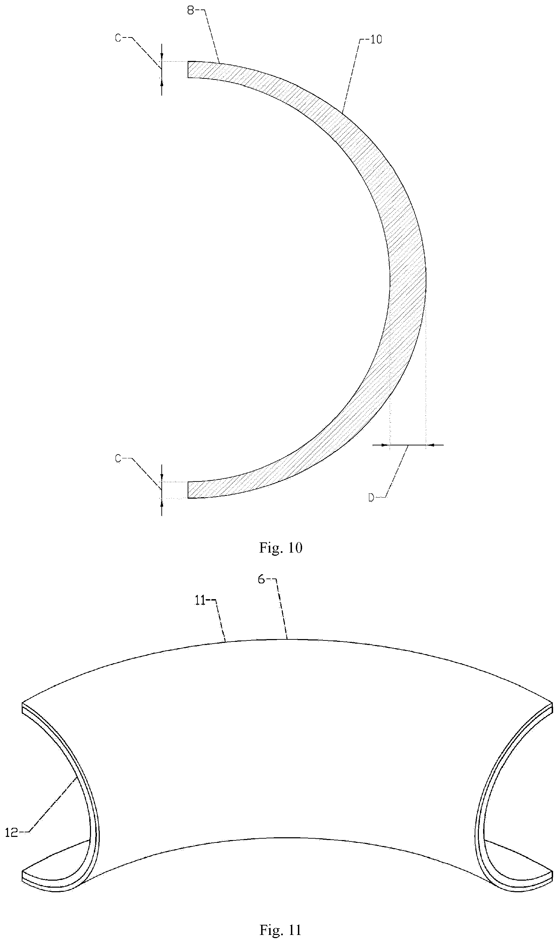

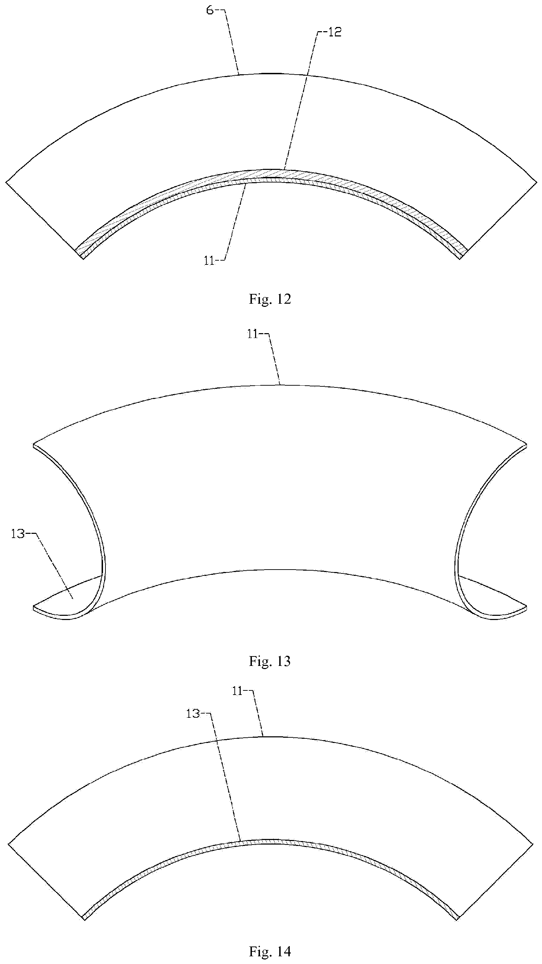

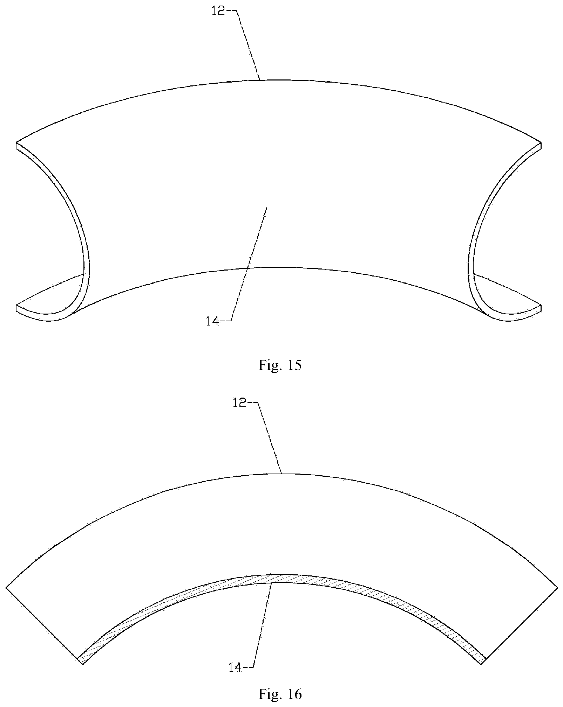

As shown in Figs. 4-16, the inner wear-resistant assembled tube 2 includes two parts, i.e., an inner wear-resistant large curve portion 8 and an inner wear-resistant small curve portion 12, both of which are half an elbow, and them can split joint together to form the inner wear-resistant assembled tube 2 with an annular cross section.The inner wear-resistant large curve portion 8 and the inner wear-resistant small curve portion 12 are made of wear resistant material with different wear resistant property from each other.

Preferably, the inner wear-resistant large curve portion 8 and inner wear-resistant small curve portion 12 of the inner wear-resistant assembled tube 2 are made of different material selected from high chromium cast iron, medium chromium cast iron, low chromium cast iron, wear resistant cast iron, ceramics, hard alloy, bearing steel, alloy steel, high molecular material and so on, wherein, the inner wear-resistant large curve portion adopts a material with better wear resistant property than that of the small curve. Preferably, the average thicker ratio of the inner wear-resistant large curve portion to the inner wear-resistant small curve portion is set as 2:1, and the wear resitant property of their material is set as 2:1. In this way, a long duration wear resistant tube can be obtained, which is two or more times of that for a normal tube.

Preferably, in this embodiment, it may further add two wear resistant connecting flanges 3, which are respectively weld on the ends of outer protective tube 1 and inner wear-resistant assembled tube 2.The wear resistant connecting flanges 3 can connect the tube of the present invention with other tube, and be used for fix the two parts of the inner wear-resistant assembled tube 2, avoiding them displace. It should be noted that the outer protective tube 1 and the inner wear-resistant assembled tube 2 may be fixed/fastened by the connecting flange or any other manner.

The outer protective tube 1 can also include two parts, i.e., a large curve outer protective portion 7 and a small curve outer protective portion 11, which are weld together forming the outer protective tube 1 with an annular cross section. The outer protection layer adopts low alloy steel or low-medium carbon alloy steel, and so on. It should be note that the outer protective tube 1 may be entirely casted or stacked as well.

In this embodiment, in order to protect the wear resistant combined tube from collision by external force, distortion and damage by striking and distortion or even damaged by impact force of internal materials during the transportation, installation and use of the tube, there are a large curve outer protective portion 7 and a small curve outer protective portion 11. The large curve outer protective portion 7 has a large curve outer protective portion coincidence surface 9, and the small curve outer protective portion 11 has a small curve outer protective portion coincidence surface 13, wherein the cross section of the large curve outer protective portion 7 and small curve outer protective portion 11 may be arc of any degrees, but the two portions combines together will form a circle with 360 degrees.

In this embodiment, in order to enhance the wear resistant property of middle position of the large curve, there is an inner wear-resistant large curve portion 8, and an inner wear-resistant large curve portion outer coincidence surface 10 outside the inner wear-resistant large curve portion 8. The inner wear-resistant large curve portion outer coincidence surface 10 is outside edge surface of inner wear-resistant large curve portion 8. In one preferred embodiment, the inner wear-resistant large curve portion 8 is designed to be thicker and thicker from two ends A to middle position B, and thicker and thicker from the two sides C to middle position D, ensuring high wear resistance of the middle position of the large curve of tube.

In this embodiment, in order to keep the wear resitant property of tube's small curve, an inner wear-resistant small curve portion 12 is adopted, and there is an inner wear-resistant small curve portion outer coincidence surface 14 out of the inner wear-resistant small curve portion 12. The inner wear-resistant small curve portion outer coincidence surface 14 is outside edge of the inner wear-resistant small curve portion 12, wherein the inner wear-resistant small curve portion 12 can be designed to be with uniform thickness or non-uniform thickness, if only it can ensure the tube's small curve portion possesses wear resistant property to a certain degree.

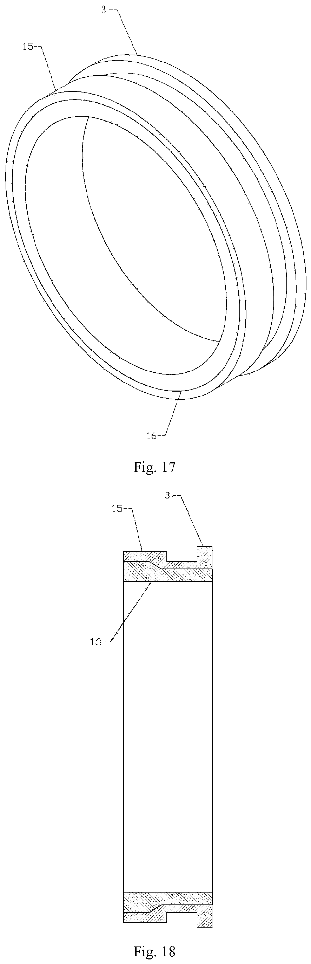

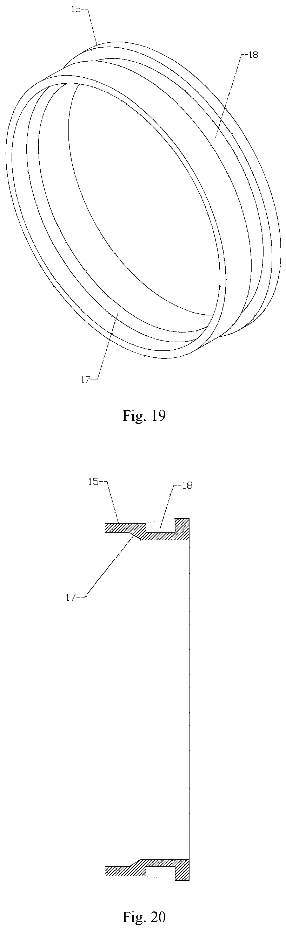

In this embodiment, in order to facilitate the installment of the elbow, it includes wear resistant connecting flanges 3, which include flange 15 and wear resistant sheath 16, wherein the wear resistant sheath 16 is mounted in the flange 15. The structure of the wear resistant connecting flanges 3 is shown in Figs. 18, 19, its position is shown as number 3 in Figs. 1 and 2.

In this embodiment, in order to extend the service life of the wear resistant connecting flange 2 and enable the connecting with other components more smoothly, it provides a wear resistant sheath 16 and an inclined coincidence surface 19 of wear resistant sheath thereon, The inclined coincidence surface 19 of wear resistant sheath is setted on out edge of the wear resistant sheath 16.

The large curve outer protective portion 7 mentioned in this embodiment preferably adopts elbow made of low-alloyed steel or medium-low carbon steel. The elbow has a large curve outer protective portion inner coincidence surface 9 and is used to protect the wear resistant combined tube from collision by external force, distortion and damage by striking and distortion or even damaged by impact force of internal materials during the transportation, installation and use of the tube.

The inner wear-resistant large curve portion 8 in this embodiment preferably adopts a wear resistant elbow casted from high chromium cast iron, medium chromium cast iron and low chromium cast iron,or forged from bearing steel, alloy steel, or agglomerated from ceramics, hard alloy, or synthetize from high molecular material,or stacked and weld from wear resistant stick; on which there is an inner wear-resistant large curve portion outer coincidence surface 10, using to enhance the wear resistance of middle of the large curve portion.

The large curve outer protective portion inner coincidence surface 9 in this embodiment is a coincidence surface on the large curve outer protective portion 7, used for facilitating the installment of the large curve outer protective portion 7 with the inner wear-resistant large curve portion 8.

The inner wear-resistant large curve portion outer coincidence surface 10 in this embodiment is a coincidence surface on the inner wear-resistant large curve portion 8, used for facilitating the installment of the large curve outer protective portion 7 with inner wear-resistant large curve portion 8.

The small curve outer protective portion 11 in this embodiment is half of an elbow casted from low-alloyed steel or medium-low carbon steel, with an small curve outer protective portion inner coincidence surface 13 thereon, used to protect the wear resistant combined tube from collision by external force, distortion and damage by striking and distortion or even damaged by impact force of internal materials during the transportation, installation and use of the tube.

The inner wear-resistant small curve portion 12 in this embodiment is a wear resistant elbow casted from high chromium cast iron, medium chromium cast iron and low chromium cast iron,or forged from bearing steel, alloy steel, or agglomerated from ceramics, hard alloy, or synthetize from high molecular material,or stacked and weld from wear resistant stick; on which there is inner wear-resistant small curve portion outer coincidence surface 14, using to enhance the wear resistance of the small curve portion.

The flange 15 in this embodiment is an component of the wear resistant connecting flange 2, which has an inclined coincidence surface 17 of flange and a connecting clamp slot 18, used to facilitate mount and connect the elbow with other equipment.

The wear resistant sheath 16 mentioined in this embodimen is a wear resistant sheath casted from high chromium cast iron, medium chromium cast iron and low chromium cast iron,or forged from bearing steel, alloy steel, or agglomerated from ceramics, hard alloy, or synthetize from high molecular material,or stacked and weld from wear resistant stick; on which there is a inclined coincidence surface 19 of wear resistant sheath; having an effect of extending the life of the wear resistant connecting flange 2 and improving its tightness.

The inclined coincidence surface of flange17 mentioned in this embodiment is: an inclined coincidence surface arranged in the flange 15, using for facilitating the installment of the flange 15 with the wear resistant sheath 16.

The connecting clamp slot 18 mentioned in this embodiment is a clamp slot arranged on the outside edge of the flange 15, using for facilitating the installment of the flange 15 with other equipments.

The inclined coincidence surface 19 of wear resistant sheath mentioned in this embodiment is an inclined coincidence surface arranged on the outer circle of the wear resistant sheath 16, using for facilitating the installment of flange 15 with wear resistant sheath 16.

Embodiment 2

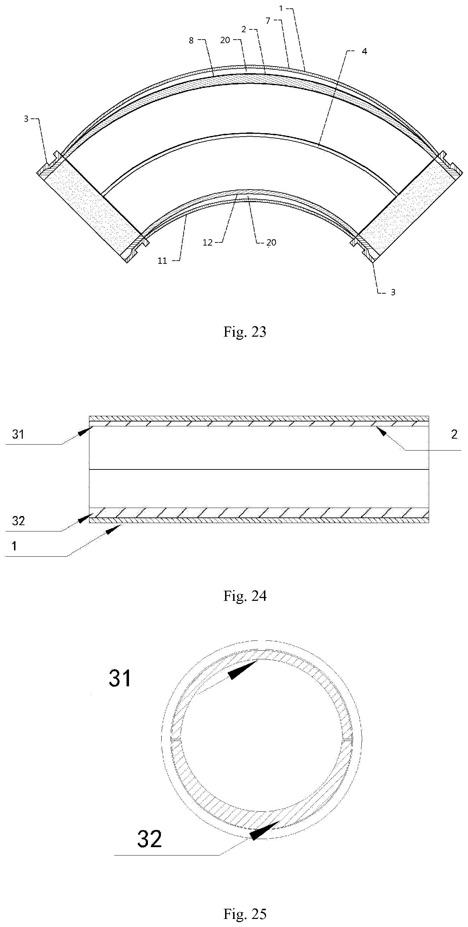

This embodiment provides another implementation for the two or more parts double-layer wear-and-impact-resistant tube in accordance with the present invention. As shown in Fig. 23, in this embodiment, the two or more parts double-layer wear-and-impact-resistant tube is consisted of an outer protective tube 1 and an inner wear-resistant assembled tube 2. The inner wear-resistant assembled tube 2 lies inside of the outer protective tube 1. The outer protective tube 1 is used for protecting the inner wear-resistant assembled tube 2, to avoid the inner wear-resistant assembled tube 2 be damaged during transporting, installing and using.

The outer protective tube 1 includes two parts, a large curve outer protective portion 7 and a small curve outer protective portion 11, which are weld together forming the outer protective tube 1 with annular cross section. The inner wear-resistant assembled tube 2 includes two parts an inner wear-resistant large curve portion 8 and an inner wear-resistant small curve portion 12, which are split joint together forming inner wear-resistant assembled tube 2 with annular cross section. The inner wear-resistant large curve portion 8 and the inner wear-resistant small curve portion 12 are made of materials with different wear resistant property.

In this embodiment, it adds two wear resistant connecting flanges 3, which are weld on the ends of the outer protective tube 1 and inner wear-resistant assembled tube 2, respectively. The wear resistant connecting flanges 3 is both used for connecting the elbow with other tubes, and used for fixing the two parts of the inner wear-resistant assembled tube 2, avoiding them to displace.

There are preserved filling channels 4 at the position that the inner wear-resistant large curve portion 8 and the inner wear-resistant small curve portion 12 contact with each other, to enable the medium/goods transferred into the space between the outer protective tube 1 and the inner wear-resistant assembled tube 2. Furthermore, in order to facilitate the medium/goods transferred enter the space between the outer protective tube 1 and inner wear-resistant assembled tube 2, there is a preserved buffer chamber 20 between the inner wear-resistant assembled tube 2 and the outer protective tube 1.

The filling channel in the present invention is a gap preset between the inner wear-resistant large curve portion 8 and the inner wear-resistant small curve portion 12, enabling the medium/goods transferred enter the space between the two layers of tube. It is shown in Figs. 1 and 2 as number 4. Further, it should be noted that the large curve outer protective portion 7 and the small curve outer protective portion 11 may be casted separately, and weld together, or may be formed as a whole. They may adopt the same material or different ones.

In the present invention, in order to reduce the difficulty of manufacturing the wear resistant elbow and enabling the leaking and filling of the space between outer protective tube 1 and the inner wear-resistant assembled tube 2, it preserves filling channels 4 between tube's large curve and small curve. By means of the filling channels 4, the inner wear-resistant large curve portion and the inner wear-resistant small curve portion do not contact each other directly, and thus, the edge of the inner wear-resistant large curve portion 8 and the edge of the inner wear-resistant small curve portion 12 do not need to complete match/coincide with each other, reducing the machining difficulty. The filling channels 4 interlink with the buffer chamber 20, making the filling of the buffer chamber 20 easier.

Preferably, in this embodiment or embodiments, the inner wear-resistant large curve portion and inner wear-resistant small curve portion of the inner wear-resistant assembled tube 2 are made of material with different wear resistant property selected from high chromium cast iron, medium chromium cast iron, low chromium cast iron, wear resistant cast iron, ceramics, hard alloy, bearing steel, alloy steel, high molecular material, and so on.

For the materials:

① $2HRC \leq HRC_{(2-1)} - HRC_{(2-2)} \leq 10HRC$

$$\triangle_{(2-2)} / \triangle_{(2-1)} = 2 \sim 6 \text{ 倍（优选 } 2 \sim 3 \text{ 倍）}$$

②

$\Delta$ represents the wear consumption amount under the same working condition circumstance, the same time and the same sample, and the wear consumption amount $\Delta = m_{prior-wear} - m_{post-wear}$.
HRC is the hardness value of the material as measured by a Rockwell hardometer.

## Experimental Results

The wear resistant elbow obtained from the present application is subjected to performance test and cost comparison, and the resulting data is shown in the following table.

| No. | Inner wear-resistant large curve portion 2-1/inner wear-resistant small curve portion 2-2 | Service life (ten thousand of cubic meters of concrete) | Cost (Yuan) |
|---|---|---|---|
| 1 | High chromium cast iron/bearing steel | 5--8 | 250--300 |
| 2 | Ceramics/bearing steel | 6--10 | 400--600 |

Taking the material No. 1 as an example, for the elbow without the filling bay, with material ingredient and thicknesses unchanged, the cost of manufacture is increased by 10--15%.

If the inner wear-resistant large curve portion and the inner wear-resistant small curve portion both use the same material with high wear resistance, service life is equivalent to the wear resistant elbow obtained from the present application and cost is increase. If the cost is guaranteed to be equivalent, then the service life is reduced.

If both the inner wear-resistant large curve portion and the inner wear-resistant small curve portion use the same material with poor wear resistance, service life is reduce as compared with the wear resistant elbow obatained from the present application.

Embodiment 3

As shown in Figs. 24-25, in this embodiment in accordance with the present invention, two or more parts double-layer wear-and-impact-resistant tube is made as a two parts double-layer straight tube, consisted of outer protective tube 1 and inner wear-resistant assembled tube 2, which are both with a structural of straight tube. The inner wear-resistant assembled tube 2 lies inside the outer protective tube 1.

The inner wear-resistant assembled tube 2 has two parts, an upper wear resitant tube wall 31 and a lower wear resitant tube wall, which are both half a tube with a cross section of half a circle, and able to split joint together to form the inner wear-resistant assembled tube 2 with annular cross section. The upper wear resitant tube wall and the lower wear resitant tube wall are made of wear resistant material with different wear resistant property. Preferably, the lower wear resitant tube wall is made of material with wear resistant property better than that of the upper wear resitant tube wall.

Preferably, the upper wear resitant tube wall and lower wear resitant tube wall of the inner wear-resistant assembled tube 2 are respectively made of one of high chromium cast iron, medium chromium cast iron, low chromium cast iron, wear resistant cast iron, ceramics, hard alloy, bearing steel, alloyed steel and high molecular material.

Currently, there is not any librature mention such structure that are heterogeneous in its upper and lower portioin in a straight tube. The structure of the embodiment is very suitable for transferring powder and mixture of solid and liquid. Such material will wear and impact the lower tube wall in a far more serious extent than that of upper tube wall. Since the lower wear resitant tube wall adopts material with better wear resistanc, the whole tube can endure more wear and impact.

In a preferred embodiment, the lower tube wall is thicker than the upper tube wall, and thus, as compared with a normal tube, with the same weight, the tube of the present invention may have a wear resitant property and life time of twice of a normal tube.

Preferably, there are gaps between the upper tube wall and the lower tube wall, using as filling channels, permitting the medium (goods) transferred enter space between the outer protective tube 1 and inner wear-resistant assembled tube 2. It should be note that, alghough there are gaps, the relative position of the tube walls of the combined tube can be kept, by the crowded of adjacent tube wall, or the flanges at the ends of tube.

More preferably, in order to facilitate the medium transferred enter the space between outer protective tube 1 and inner wear-resistant assembled tube 2, there is a buffer chamber between the inner wear-resistant assembled tube 2 and the outer protective tube 1. Such implement is suitable used for transferring such medium that can solidify. By adding the buffer chamber, it can provide a buffer space fo the inner tube, avoid it broken by a sudden impact, solving a problem of easy crack due to inner tube's high hardness.

Embodiment 4

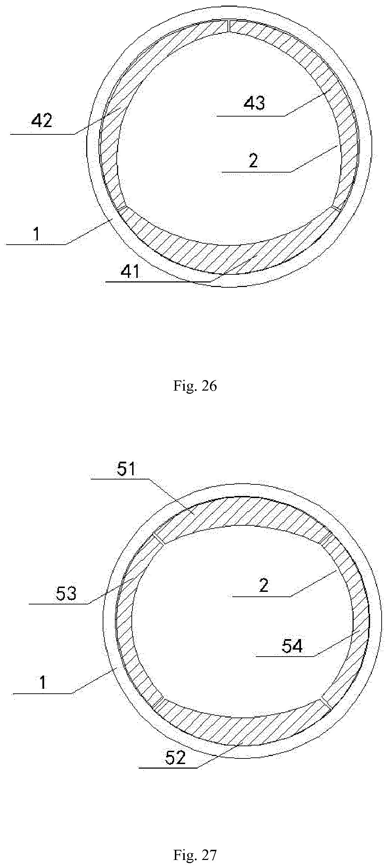

As shown in Fig. 26, in this embodiment not according to the present invention, the two or more parts double-layer wear-and-impact-resistant tube is made as a three parts/branches double-layer straight tube, consisted of an outer protective tube 1 and an inner wear-resistant assembled tube 2, both are straight tube. The inner wear-resistant assembled tube 2 is nested inside the outer protective tube 1.

The inner wear-resistant assembled tube 2 is divided into three parts, i.e., a lower wear resitant tube wall 41, a left-up tube wall 42 and a right-up tube wall 43, each part has a curved cross section, which split joint together forming the inner wear-resistant assembled tube 2 with an annular cross section. Among the upper wear resitant tube wall 41, the left-up tube wall 42 and the right-up tube wall 43, at least the lower wear resitant tube wall 41 is made of material different from that of other parts. Preferably, the lower wear resitant tube wall adopts materials with wear resistant property better than the upper wear resitant tube wall 41 and the left-up tube wall 42.

Preferably, the upper wear resitant tube wall 41, the left-up tube wall 42 and the right-up tube wall 43 of the inner wear-resistant assembled tube 2 are made of different materials selected from high chromium cast iron, medium chromium cast iron, low chromium cast iron, wear resistant cast iron, ceramics, hard alloy, bearing steel, alloy steel and high molecular material.

Preferably, there are gaps between any adjacent tube walls, using as filling channels, permitting medium transferred enter space between the outer protective tube 1 and the inner wear-resistant assembled tube 2.

More preferably, in order to facilitate the medium transferred enter space between the outer protective tube 1 and inner wear-resistant assembled tube 2, There may preserve a buffer chamber between the inner wear-resistant assembled tube 2 and outer protective tube 1. Such implementation is especially suitable for transferring such medium that can solidify. Preferably, the buffer chamber is merely set between the lower tube wall and outer protective tube 1, since the lower tube wall is impacted most seriously.

Embodiment 5

In this embodiment not according to the present invention, the two or more parts double-layer wear-and-impact-resistant tube is made as a four parts/branches double-layer straight tube, consisted of an outer protective tube 1 and an inner wear-resistant assembled tube 2, both are straight tube. The inner wear-resistant assembled tube 2 is nested inside the outer protective tube 1.

The inner wear-resistant assembled tube 2 is divided into four parts, i.e., an upper wear resitant tube wall 51, a lower wear resitant tube wall 52, a left tube wall 53 and a right tube wall 54, each part has a curved cross section, which split joint together forming the inner wear-resistant assembled tube 2 with an annular cross section. Among the upper wear resitant tube wall 51, lower wear resitant tube wall 52, left tube wall 53 and right tube wall 54, at least the lower wear resitant tube wall is made of material different from that of other parts. Preferably the upper wear resitant tube wall 51 is made of material different from tha tof the lower wear resitant tube wall 52, the left tube wall 53 and the right tube wall 54, but the left tube wall 53 and the right tube wall 54 are made of the same material. Preferably, the lower wear resitant tube wall 52 is made of material with better wear resistant property than the lefet and tube walls 53, 54, the lefet and right tube walls 53, 54 adopts material with with better wear resistant property than the upper wear resitant tube wall 51.

Preferably, the upper wear resitant tube wall 51, lower wear resitant tube wall 52, left tube wall 53 and right tube wall 54 are made of different material selected from high chromium cast iron, medium chromium cast iron, low chromium cast iron, wear resistant cast iron, ceramics, hard alloy, bearing steel, alloy steel and high molecular material.

In this embodiment, the upper tube wall 51 and lower tube wall 52 may be symmetrically arranged, in order to exchange with each other in use, i.e., the upper tube wall is used as lower tube wall, and vice versa.

In the present invention, the heterogeneous inner wear resistant combined tube has such advantages: it can adopt material with high wear resistant and high impact resistant property for the protion that is easy to be worn and suffers serious impact, and adopt material with low wear resistant and impact resistant property for the protion that is not easy to be worn and suffers slight impact. Thus, it saves cost for the raw material, improves wear resistant property, and extends life time of tube. For example, if the inner wear-resistant large curve portion adopts high chromium cast iron and the inner wear-resistant small curve portion adopts alloy steel. Currently, the price of the high chromium cast iron is about twenty Yuan/Kg, while the alloy steel is 4 Yuan/Kg. The cost will reduce more than 40%. This is a significant improve in tube machining.

It should be noted that, the components of the embodiments in the present invention may combine with each other, which are included in the scope of the present invention as defined in the appended claims. Further, it should be noted that, the tube of the present invention may be specific shape, and those skilled in the are may adjust its shape according actual useness based on the principle of the present invention, which is also included in the scope of the present invention.

While the principles of the invention have been described in detail with reference to the preferred embodiments of the present invention, it will be understood by those skilled in the art that the foregoing embodiments are merely explanation of the illustrative embodiments of the invention and are not intended to limit the scope of the invention. The details in the embodiments are not to be construed as limiting the scope of the invention, and any obvious change which are based on the technical solutions of the present invention without departing from the scope of the invention, falls within the protection scope of the present invention.

**Claims**

1.  A two parts double-layer wear-and-impact-resistant tube, wherein the wear-and-impact-resistant tube is used for transporting concrete and includes an outer protective tube (1) and an inner wear-resistant assembled tube (2), wherein the inner wear-resistant assembled tube (2) is nested in the outer protective tube (1), leaving a buffer chamber (20) therebetween, the inner wear-resistant assembled tube (2) is composed of two tube walls (8, 12), the two tube walls split joint together and form the body of inner tube (2) with an annular cross section wherein the two tube walls (8, 12) are made of different materials; **characterised in that** there are filling channels (4) with predefined width between the two tube walls (8, 12), which filling channels (4) enable the auto-filling of the buffer chamber (20) between the outer protective tube (1) and the inner wear-resistant assembled tube (2) upon transporting of concrete.

2.  The two parts double-layer wear-and-impact-resistant tube of claim 1, **characterized in that** the thickness of the two tube walls of the inner wear-resistant assembled tube (2) are different from each other.

3. The two parts double-layer wear-and-impact-resistant tube of claim 1, **characterized in that** it further includes wear resistant connecting flanges (3), each of the wear resistant connecting flange (3) is consisted of a flange and a wear resistant sheath mounted inside the flange, the wear resistant connecting flanges (3) are weld on the two ends of the outer protective tube (1) and the inner wear-resistant assembled tube (2), respectively.

4. The two parts double-layer wear-and-impact-resistant tube of claim 1, **characterized in that** the wear-and-impact-resistant tube is a wear resistant elbow, wherein, the inner wear-resistant assembled tube (2) of the wear resistant elbow is consisted of an inner wear-resistant small curve portion and an inner wear-resistant large curve portion, and the wear resistant property of the material adopted by the inner wear-resistant large curve portion is better than that of the inner wear-resistant small portion.

5. The two parts double-layer wear-and-impact-resistant tube of claim 4, **characterized in that** the outer protective tube (1) includes a large curve outer protective portion and a small curve outer protective portion, the outer protective tube (1) is made of a material that different from the same of the inner wear-resistant assembled tube (2), the large curve outer protective portion is disposed outside the inner wear-resistant large curve portion, the small curve outer protective portion is disposed outside the inner wear-resistant small curve portion, the large curve outer protective portion and the small curve outer protective portion are weld together along their side edges forming the tube body with tubular cross section, and the end edges of the large curve outer protective portion and the small curve outer protective portion are weld together, wherein the large curve outer protective portion and the small curve outer protective portion are made of low-alloyed steel or medium-low carbon steel material.

6. The two parts double-layer wear-and-impact-resistant tube of claim 4, **characterized in that** the tube wall of the inner wear-resistant assembled tube is made of one of high chromium cast iron, medium chromium cast iron, low chromium cast iron, wear resistant cast iron, ceramics, hard alloy, bearing steel, alloy steel and high molecular material; and/or the inner wear-resistant large curve portion is designed to be thicker and thicker from two ends A to middle position B, and thicker and thicker from the two sides C to middle position D.

7. The two parts double-layer wear-and-impact-resistant tube of claim 1, **characterized in that** the wear-and-impact-resistant tube is a wear resistant straight tube, the thickness of the inner wear-resistant assembled tube (2) of the wear resistant straight tube is different along the periphery of its cross section, wherein in the inner wear-resistant assembled tube (2), the material adopted by the tube wall at its bottom has a better wear resistant property than that of the side tube wall and top tube wall.

8. A method for manufacturing the two parts double-layer wear-and-impact-resistant tube of one of claims 1-7, the method including: (A) producing an inner wear-resistant assembled tube (2), wherein the producing process includes:

    (A1) producing two tube walls, which are able to piece up together in sequence and form the inner wear-resistant assembled tube (2) with an annular cross section wherein the two tube walls are made of different materials;
    (A2) piecing up the two tube walls in sequence and forming the inner wear-resistant assembled tube (2) with an annular cross section;
    (B) producing an outer protective tube (1), and disposing the outer protective tube (1) outside the inner wear-resistant assembled tube (2), leaving a buffer chamber between the outer protective tube (1) and the inner wear-resistant assembled tube (2);
    (C) combining the ends of the outer protective tube (1) and the ends of the inner wear-resistant assembled tube (2) together,
    wherein there is a filling channel with predefined width between the two tube walls, which filling channel enable the auto-filling of the space between the outer protective tube (1) and the inner wear-resistant assembled tube (2) upon transporting of concrete .

9. The method for manufacturing the two parts double-layer wear-and-impact-resistant tube of claim 8, **characterized in that** the wear-and-impact-resistant tube is a wear resistant elbow, wherein, the inner wear-resistant assembled tube (2) of the wear resistant elbow includes an inner wear-resistant small curve portion and an inner wear-resistant large curve portion, and the inner wear-resistant large curve portion is made of material with better wear resistant property than that of the inner wear-resistant small curve portion; and the inner wear-resistant large curve portion is designed to be thicker and thicker from two ends A to middle position B, and thicker and thicker from the two sides C to middle position D.

10. The method for manufacturing the two parts double-layer wear-and-impact-resistant tube of claim 8, **characterized in that** the wear-and-impact-resistant tube is a wear resistant straight tube, the thickness of the inner wear-resistant assembled tube (2) of the wear resistant straight tube is different along the periphery of its cross section;.

11. The method for manufacturing the two parts double-layer wear-and-impact-resistant tube of claim 8, **characterized in that** the method further includes:
producing wear resistant connecting flanges (3), each of the wear resistant connecting flange (3) is consisted of a flange and a wear resistant sheath mounted inside the flange, the wear resistant sheath has an inclined coincidence surface on its outer edge.

**Patentansprüche**

1. Zweiteiliges, doppelschichtiges, verschleiß- und schlagfestes Rohr, wobei das verschleiß- und schlagfeste Rohr zum Transport von Beton dient und ein äußeres Schutzrohr (1) und ein inneres, verschleißfestes, zusammengesetztes Rohr (2) umfasst, wobei das innere, verschleißfeste, zusammengesetzte Rohr (2) im äußeren Schutzrohr (1) eingebettet ist, wobei dazwischen eine Pufferkammer (20) verbleibt, und wobei das innere, verschleißfeste, zusammengesetzte Rohr (2) aus zwei Rohrwänden (8, 12) ausgebildet ist, wobei die beiden Rohrwände geteilt zusammengefügt sind und den Körper des Innenrohres (2) ausbilden, wobei die beiden Rohrwände (8, 12) aus verschiedenen Materialien gefertigt sind; **dadurch gekennzeichnet, dass** zwischen den beiden Rohrwänden (8, 12) Füllkanäle (4) mit vorgegebener Breite vorhanden sind, welche ein automatisches Befüllen der Pufferkammer (20) zwischen dem äußeren Schutzrohr (1) und dem inneren, verschleißfesten, zusammengesetzten Rohr (2) beim Transport von Beton ermöglichen.

2. Zweiteiliges, doppelschichtiges, verschleiß- und schlagfestes Rohr gemäß Anspruch 1, **dadurch gekennzeichnet, dass** die Dicke der beiden Rohrwände des inneren, verschleißfesten, zusammengesetzten Rohres (2) unterschiedlich ist.

3. Zweiteiliges, doppelschichtiges, verschleiß- und schlagfestes Rohr gemäß Anspruch 1, **dadurch gekennzeichnet, dass** es weiterhin verschleißfeste Verbindungsflansche (3) aufweist, wobei jeder der verschleißfesten Verbindungsflansche (3) aus einem Flansch und einer innerhalb des Flansches angebrachten, verschleißfesten Hülle besteht, wobei die verschleißfesten Verbindungsflansche (3) jeweils mit den beiden Enden des äußeren Schutzrohrs (1) und des inneren, verschleißfesten, zusammengesetzten Rohr (2) verschweißt sind.

4. Zweiteiliges, doppelschichtiges, verschleiß- und schlagfestes Rohr gemäß Anspruch 1, **dadurch gekennzeichnet, dass** das verschleiß- und schlagfeste Rohr ein verschleißfester Rohrbogen ist, wobei das innere, verschleißfeste, zusammengesetzte Rohr (2) des verschleißfesten Rohrbogens aus einem inneren, verschleißfesten Abschnitt mit kleiner Krümmung und einem inneren, verschleißfesten Abschnitt mit großer Krümmung besteht, und die Eigenschaft der Verschleißfestigkeit des Materials, das durch den inneren, verschleißfesten, großen Abschnitt mit großer Krümmung angenommen wird, besser ist als die des inneren, verschleißfesten Abschnitts mit kleiner Krümmung.

5. Zweiteiliges, doppelschichtiges, verschleiß- und schlagfestes Rohr gemäß Anspruch 4, **dadurch gekennzeichnet, dass** das äußere Schutzrohr (1) einen äußeren Schutzabschnitt mit großer Krümmung und einen äußeren Schutzabschnitt mit kleiner Krümmung aufweist, wobei das äußere Schutzrohr (1) aus einem Material hergestellt ist, welches sich vom gleichen des inneren, verschleißfesten, zusammengesetzten Rohres (2) unterscheidet, wobei der äußere Schutzabschnitt mit großer Krümmung außerhalb des inneren, verschleißfesten Abschnitts mit großer Krümmung angeordnet ist, und der äußere Schutzabschnitt mit kleiner Krümmung außerhalb des inneren, verschleißfesten Abschnitts mit kleiner Krümmung angeordnet ist, wobei der äußere Schutzabschnitt mit großer Krümmung und der äußere Schutzabschnitt mit kleiner Krümmung zur Ausbildung eines Rohrkörpers mit rohrförmigem Querschnitt entlang ihrer Seitenkanten miteinander verschweißt sind, und wobei die Endkanten des äußeren Schutzabschnitts mit großer Krümmung und des äußeren Schutzabschnitts mit kleiner Krümmung miteinander verschweißt sind, wobei der äußere Schutzabschnitt mit großer Krümmung und der äußere Schutzabschnitt mit kleiner Krümmung aus niedriglegiertem Stahl oder aus Stahl mit mittlerem bis niedrigem Kohlenstoffgehalt hergestellt sind.

6. Zweiteiliges, doppelschichtiges, verschleiß- und schlagfestes Rohr gemäß Anspruch 4, **dadurch gekennzeichnet, dass** die Rohrwand des inneren, verschleißfesten, zusammengesetzten Rohres aus einem Material besteht ausgewählt aus Gusseisen mit hohem Chromgehalt, Gusseisen mit mittlerem Chromgehalt, Gusseisen mit niedrigem Chromgehalt, verschleißfestem Gusseisen, Keramik, einer harten Legierung, Lagerstahl, legiertem Stahl und hochmolekularem Material; und/oder der innere, verschleißfeste, Abschnitt mit großer Krümmung von den beiden Enden A bis zur Mittelposition B immer dicker und von den beiden Seiten C bis zur Mittelposition D immer dicker ausgeführt ist.

7. Zweiteiliges, doppelschichtiges, verschleiß- und schlagfestes Rohr gemäß Anspruch 1, **dadurch gekennzeichnet, dass** das verschleiß- und schlagfeste Rohr ein verschleißfestes, gerades Rohr ist, wobei die Dicke des inneren, verschleißfesten, zusammengesetzten Rohres (2) des verschleißfesten, geraden Rohres entlang des Umfangs seines Querschnitts unterschiedlich ausgebildet ist, wobei im inneren, verschleißfesten, zusammengesetzten Rohr (2) das vom Boden der Rohrwand angenommene Material eine bessere Verschleißeigenschaft als das der seitlichen Rohrwand und der oberen Rohrwand aufweist.

8. Verfahren zur Herstellung des zweiteiligen, doppelschichtigen, verschleiß- und schlagfesten Rohrs gemäß einem der Ansprüche 1 bis 7, wobei das Verfahren umfasst:

   (A) Herstellen eines inneren, verschleißfesten, zusammengesetzten Rohrs (2), wobei das Herstellungsverfahren umfasst:

   (A1) Herstellen zweier Rohrwände, welche in der Lage sind, sich nacheinander zusammenzufügen und das innere; verschleißfeste; zusammengesetzte Rohr (2) mit einem ringförmigen Querschnitt auszubilden, wobei die beiden Rohrwände aus unterschiedlichen Materialien hergestellt sind;
   (A2) Zusammenfügen der beiden Rohrwände nacheinander und Ausbilden des inneren, verschleißfesten, zusammengesetzten Rohrs (2) mit einem ringförmigen Querschnitt;

   (B) Herstellen eines äußeren Schutzrohrs (1) und Anordnen des äußeren Schutzrohrs (1) außerhalb des inneren, verschleißfesten, zusammengesetzten Rohrs (2), wobei eine Pufferkammer zwischen dem äußeren Schutzrohr (1) und dem inneren, verschleißfesten, zusammengesetzten Rohr (2) verbleibt;
   (C) Miteinander-Verbinden der Enden des äußeren Schutzrohrs (1) und der Enden des inneren, verschleißfesten, zusammengesetzten Rohrs (2), wobei ein Füllkanal mit einer vordefinierten Breite zwischen den beiden Rohrwänden vorhanden ist, wobei der Füllkanal das automatische Befüllen des Raums zwischen dem äußeren Schutzrohr (1) und dem inneren, verschleißfesten, zusammengesetzten Rohr (2) beim Transport von Beton ermöglicht.

9. Verfahren zur Herstellung des zweiteiligen, doppelschichtigen, verschleiß- und schlagfesten Rohrs gemäß Anspruch 8, **dadurch gekennzeichnet, dass** das verschleiß- und schlagfeste Rohr ein verschleißfester Rohrbogen ist, wobei das innere, verschleißfeste, zusammengesetzte Rohr (2) des verschleißfesten Rohrbogens einen inneren, verschleißfesten Abschnitt mit kleiner Krümmung und einen inneren, verschleißfesten Abschnitt mit großer Krümmung aufweist und der innere, verschleißfeste Abschnitt mit großer Krümmung aus einem Material mit einer besseren Verschleißfestigkeit als der innere, verschleißfeste Abschnitt mit kleiner Krümmung besteht; und wobei der innere, verschleißfeste Abschnitt mit großer Krümmung so ausgelegt ist, dass er von den beiden Enden A bis zur Mittelposition B immer dicker und von den beiden Seiten C bis zur Mittelposition D immer dicker ausgeführt ist.

10. Verfahren zur Herstellung des zweiteiligen, doppelschichtigen, verschleiß- und schlagfesten Rohrs gemäß Anspruch 8, **dadurch gekennzeichnet, dass** das verschleiß- und schlagfeste Rohr ein verschleißfestes gerades Rohr ist, wobei die Dicke des inneren, verschleißfesten, zusammengesetzten Rohrs (2) des verschleißfesten geraden Rohrs entlang des Umfangs seines Querschnitts unterschiedlich ausgebildet ist.

11. Verfahren zur Herstellung des zweiteiligen, doppelschichtigen, verschleiß- und schlagfesten Rohrs gemäß Anspruch 8, **dadurch gekennzeichnet, dass** das Verfahren ferner umfasst:
Herstellung von verschleißfesten Verbindungsflanschen (3), wobei jeder der verschleißfesten Verbindungsflansche (3) aus einem Flansch und einer im Inneren des Flansches angebrachten, verschleißfesten Hülle besteht, wobei die verschleißfeste Hülle an ihrem äußeren Rand eine geneigte Übereinstimmungsfläche aufweist.


## Revendications

1. Tube résistant à l'usure et aux chocs, à deux couches, du type à deux branches, ledit tube résistant à l'usure et aux chocs étant utilisé pour transporter du béton et comprenant un tube de protection extérieur (1) et un tube intérieur assemblé résistant à l'usure (2), où

le tube intérieur assemblé résistant à l'usure (2) est emboîté dans le tube de protection extérieur (1) en ménageant une chambre tampon (20) entre les deux, le tube intérieur assemblé résistant à l'usure (2) est constitué de deux parois de tube (8, 12), les deux parois de tube sont à raccord fendu et forment le corps du tube intérieur (2) avec une section transversale annulaire, les deux parois de tube (8, 12) étant en matériaux différents ; **caractérisé en ce que** des canaux de remplissage (4) de largeur définie sont présentés entre les deux parois de tube (8, 12), lesdits canaux de remplissage (4) permettant le remplissage automatique de la chambre tampon (20) entre le tube de protection extérieur (1) et le tube intérieur assemblé résistant à l'usure (2) par transport de béton.

2. Tube résistant à l'usure et aux chocs, à deux couches, du type à deux branches selon la revendication 1, **caractérisé en ce que** les deux parois de tube du tube intérieur assemblé résistant à l'usure (2) ont des épaisseurs différentes l'une de l'autre.

3. Tube résistant à l'usure et aux chocs, à deux couches, du type à deux branches selon la revendication 1, **caractérisé en ce que** celui-ci comprend en outre brides de connexion résistantes à l'usure (3), chaque bride de connexion résistante à l'usure (3) consistant en une bride et une gaine résistante à l'usure montée à l'intérieur de la bride, les brides de connexion résistantes à l'usure (3) étant respectivement soudées sur les deux extrémités du tube de protection extérieur (1) et du tube intérieur assemblé résistant à l'usure (2).

4. Tube résistant à l'usure et aux chocs, à deux couches, du type à deux branches selon la revendication 1, **caractérisé en ce que** le tube résistant à l'usure et aux chocs est un coude résistant à l'usure, le tube intérieur assemblé résistant à l'usure (2) du coude résistant à l'usure consistant en une partie courbe intérieure courte résistante à l'usure et une partie courbe intérieure large résistante à l'usure, et la résistance à l'usure du matériau de la partie courbe intérieure large résistante à l'usure étant supérieure à celle de la partie courbe intérieure courte résistante à l'usure.

5. Tube résistant à l'usure et aux chocs, à deux couches, du type à deux branches selon la revendication 4, **caractérisé en ce que** le tube de protection extérieur (1) comprend une partie protectrice courbe extérieure large et une partie protectrice courbe extérieure courte, le tube de protection extérieur (1) étant constitué d'un matériau différent de celui du tube intérieur assemblé résistant à l'usure (2), la partie protectrice courbe extérieure large étant présentée à l'extérieur de la partie courbe intérieure large résistante à l'usure, la partie protectrice courbe extérieure courte étant présentée à l'extérieur de la partie courbe intérieure courte résistante à l'usure, la partie protectrice courbe extérieure large et la partie protectrice courbe extérieure courte étant soudées l'une à l'autre le long de leurs bords latéraux formant le corps de tube de section transversale tubulaire, et les bords d'extrémité de la partie protectrice courbe extérieure large et de la partie protectrice courbe extérieure courte étant soudés l'un à l'autre, la partie protectrice courbe extérieure large et la partie protectrice courbe extérieure courte étant en acier faiblement allié ou en acier à teneur en carbone faible à moyenne.

6. Tube résistant à l'usure et aux chocs, à deux couches, du type à deux branches selon la revendication 4, **caractérisé en ce que** la paroi de tube du tube intérieur assemblé résistant à l'usure est en fonte à forte teneur en chrome ou en fonte à moyenne teneur en chrome ou en fonte à faible teneur en chrome ou en fonte résistante à l'usure ou en céramique ou en alliage dur ou en acier pour roulements ou en acier allié ou en matériau à poids moléculaire élevé ; et/ou la partie courbe intérieure large résistante à l'usure est prévue pour être de plus en plus épaisse depuis les deux extrémités A jusqu'au point central B, et de plus en plus épaisse depuis les deux côtés C jusqu'au point central D.

7. Tube résistant à l'usure et aux chocs, à deux couches, du type à deux branches selon la revendication 1, **caractérisé en ce que** le tube résistant à l'usure et aux chocs est un tube rectiligne résistant à l'usure, l'épaisseur du tube intérieur assemblé résistant à l'usure (2) du tube rectiligne résistant à l'usure variant le long de la périphérie de sa section transversale, la résistance à l'usure du matériau de la paroi de tube sur le fond de celui-ci, dans le tube intérieur assemblé résistant à l'usure (2), étant supérieure à celle de la paroi latérale et de la paroi de sommet du tube.

8. Procédé de fabrication du tube résistant à l'usure et aux chocs, à deux couches, du type à deux branches selon l'une des revendications 1 à 7, ledit procédé comprenant :

   (A) la production d'un tube intérieur assemblé résistant à l'usure (2), le processus de production comprenant :

   (A1) la production de deux parois de tube, aptes à être raccordées séquentiellement et à former le tube intérieur assemblé résistant à l'usure (2) de section transversale annulaire, les deux parois de tube étant en matériaux différents ;
   (A2) le raccordement séquentiel des deux parois de tube et forming le tube intérieur assemblé résistant à l'usure (2) de section transversale annulaire ;

(B) la production d'un tube de protection extérieur (1), et la disposition du tube de protection extérieur (1) à l'extérieur du tube intérieur assemblé résistant à l'usure (2), en ménageant une chambre tampon entre le tube de protection extérieur (1) et le tube intérieur assemblé résistant à l'usure (2) ;
(C) la fusion des extrémités du tube de protection extérieur (1) et des extrémités du tube intérieur assemblé résistant à l'usure (2),
un canal de remplissage de largeur définie étant présenté entre les deux parois de tube, ledit canal de remplissage permettant le remplissage automatique de l'espace entre le tube de protection extérieur (1) et le tube intérieur assemblé résistant à l'usure (2) par transport de béton.

9. Procédé de fabrication du tube résistant à l'usure et aux chocs, à deux couches, du type à deux branches selon la revendication 8, **caractérisé en ce que** le tube résistant à l'usure et aux chocs est un coude résistant à l'usure, le tube intérieur assemblé résistant à l'usure (2) du coude résistant à l'usure consistant en une partie courbe intérieure courte résistante à l'usure et une partie courbe intérieure large résistante à l'usure, et la résistance à l'usure du matériau de la partie courbe intérieure large résistante à l'usure étant supérieure à celle de la partie courbe intérieure courte résistante à l'usure ; et la partie courbe intérieure large résistante à l'usure étant prévue pour être de plus en plus épaisse depuis les deux extrémités A jusqu'au point central B, et de plus en plus épaisse depuis les deux côtés C jusqu'au point central D.

10. Procédé de fabrication du tube résistant à l'usure et aux chocs, à deux couches, du type à deux branches selon la revendication 8, **caractérisé en ce que** le tube résistant à l'usure et aux chocs est un tube rectiligne résistant à l'usure, l'épaisseur du tube intérieur assemblé résistant à l'usure (2) du tube rectiligne résistant à l'usure variant le long de la périphérie de sa section transversale.

11. Procédé de fabrication du tube résistant à l'usure et aux chocs, à deux couches, du type à deux branches selon la revendication 8, **caractérisé en ce que** ledit procédé comprend en outre :
la production de brides de connexion résistantes à l'usure (3), chaque bride de connexion résistante à l'usure (3) consistant en une bride et une gaine résistante à l'usure montée à l'intérieur de la bride, la gaine résistante à l'usure présentant une surface de coïncidence inclinée sur son bord extérieur.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201510108071
- CN 201510480201
- CN 203023710 U
- CN 104061394 A
- DE 19500952 C1
- DE 19500953 C1